# EUROPÄISCHE PATENTSCHRIFT

(11) **EP 2 594 054 B1**
(45) Veröffentlichungstag und Bekanntmachung des Hinweises auf die Patenterteilung: **04.06.2014**
(21) Anmeldenummer: 11733664.4
(22) Anmeldetag: 12.07.2011
(51) Int. Cl.: B61L 15/00, H04L 29/14, H04L 12/46

(54) **VERKEHRSMITTEL ZUR KABELGEBUNDENEN DATENÜBERTRAGUNG ZWISCHEN ZWEI LÖSBAR MITEINANDER VERBUNDENEN FAHRZEUGEN**
APPARATUS FOR WIRED TRANSMISSION OF DATA BETWEEN TWO VEHICLES WHICH ARE DETACHABLY CONNECTED TO ONE ANOTHER
APPAREIL DE TRANSPORT DE TRANSMISSION DE DONNÉES PAR CÂBLE ENTRE DEUX VÉHICULES RELIÉS AMOVIBLE L'UN À L'AUTRE

(30) Priorität: 16.07.2010 DE 102010027283
(43) Veröffentlichungstag der Anmeldung: 22.05.2013
(73) Patentinhaber: Siemens Aktiengesellschaft, 80333 München (DE)
(72) Erfinder: KARL, Harald, 90765 Fürth (DE); KERN, Karl-Heinz, 90480 Nürnberg (DE)
(86) Internationale Anmeldenummer: PCT/EP2011/061841
(87) Internationale Veröffentlichungsnummer: WO 2012/007454

(56) Entgegenhaltungen:
- EP-A2- 1 422 833
- US-A1- 2010 044 333
- Paral, Thomas: "IP network backbone with era_transceiver, 1 GBit/s communication over automatic couplers", , 21. November 2009 (2009-11-21), Seiten 1-31, XP002666073, Gefunden im Internet: URL:http://www.ukintpress-conferences.com/ conf/09rix_conf/pdfs/Day%202/12_Thomas_Par al.pdf
- KURZ H R: "ZUGSTEUERUNG MIT LICHTWELLENLEITER-DATENUBERTRAGUNG FUR DIE TRIEBZUGE INTERCITY-EXPRESS", 1. Mai 1989 (1989-05-01), ELEKTRISCHE BAHNEN, OLDENBOURG INDUSTRIEVERLAG, MUNCHEN, DE, PAGE(S) 129 - 134, XP000030209, ISSN: 0013-5437 Absätze [002.], [005.]; Abbildungen 2,5,6

## Beschreibung

Die Erfindung betrifft ein Verkehrsmittel bestehend aus lösbar miteinander verbundenen Fahrzeugen.

In Verkehrsmitteln, die aus mehreren lösbar miteinander verbundenen Fahrzeugen, insbesondere Schienenfahrzeugen, bestehen, werden Daten zwischen den Fahrzeugen und innerhalb der Fahrzeuge häufig mittels eines Feldbusses übertragen, der auf einer durchgehenden Drahtverbindung basiert.

Das Dokument Paral, Thomas: "IP network backbone with eratransceiver, 1 GBit/s communication over automatic couplers", http://www.ukintpress-conferences.com/conf/09rix_conf/pdfs /Day%202/12_Thomas_Paral.pdf offenbart ein Verkehrsmittel gemäß Oberbegriff des Patentanspruchs 1. Bei einem darin offenbarten Datenübertragungssystem für Schienenfahrzeuge sind aus Ethernetsignalen erzeugte optische Richtfunksignale zwischen zwei Enden eines Schienenfahrzeuges redundant übertragbar.

EP 1 422 833 A2 offenbart ein Informationsübertragungssystem für einen Eisenbahnzug mit mehreren Wagen und zwei Hauptübertragungsleitungen zur Übertragung von Informationen zwischen den Wagen. In jedem Wagen sind zwei Übertragungsstationen angeordnet, die jeweils mit beiden Hauptübertragungsleitungen verbunden sind und über diese Informationen senden und empfangen können. Die Informationen werden gleichzeitig über beide Hauptübertragungsleitungen gesendet. Ein Verbindungsabbruchsfehler in einer ersten Hauptübertragungsleitung wird dadurch erkannt, dass Übertragungsstationen Informationen nur noch über die zweite Hauptübertragungsleitung empfangen. Zur Korrektur dieses Fehlers werden die über die zweite Hauptübertragungsleitung empfangenen Informationen von einer Übertragungsstation auch über die erste Hauptübertragungsleitung weitergeleitet.

Weiterhin wird zum Stand der Technik auf die WO 2007/079501 A2 verwiesen.

Es ist eine Aufgabe der Erfindung, ein Verkehrsmittel bestehend aus lösbar miteinander verbundenen Fahrzeugen mit einer verbesserten Datenübertragungsvorrichtung zur Datenübertragung zwischen den Fahrzeugen und innerhalb der Fahrzeuge anzugeben.

Die Aufgabe wird erfindungsgemäß hinsichtlich des Verkehrsmittels durch die Merkmale des Anspruchs 1 gelöst.

Vorteilhafte Ausgestaltungen der Erfindung sind Gegenstand der Unteransprüche.

Ein erfindungsgemäßes Verkehrsmittel besteht aus lösbar miteinander verbundenen Fahrzeugen mit einer Datenübertragungsvorrichtung zur kabelgebundenen Datenübertragung zwischen den Fahrzeugen und innerhalb der Fahrzeuge. Die Datenübertragungsvorrichtung umfasst im Bereich beider Enden eines jeden Fahrzeuges jeweils eine Datenkopplungseinheit zur Datenübertragung zwischen dem jeweiligen Fahrzeug und einem an dessen jeweiligen Ende mit ihm verbundenen Fahrzeug, in jedem Fahrzeug eine seine beiden Datenkopplungseinheiten verbindende erste Datenverbindung, die aus ersten Übertragungsleitungen und wenigstens einer zwei erste Übertragungsleitungen verbindenden Segmentverbindungseinheit besteht und eine Linientopologie aufweist und in jedem Fahrzeug eine seine beiden Datenkopplungseinheiten verbindende redundante passive zweite Datenverbindung. Dabei weist jede Datenkopplungseinheit vier Datenports auf, von denen ein erster und ein zweiter jeweils mit den entsprechenden Datenports einer Datenkopplungseinheit eines anderen Fahrzeuges verbunden sind, ein dritter mit der ersten Datenverbindung des Fahrzeuges verbunden ist und ein vierter mit der zweiten Datenverbindung des Fahrzeuges verbunden ist. Ferner weist jede Datenkopplungseinheit eine oder mehrere Switcheinheiten auf, mittels derer verschiedene elektrische Verbindungszustände der Datenports herstellbar sind. Dabei sind in einem ersten Verbindungszustand nur der erste und der dritte Datenport, in einem zweiten Verbindungszustand nur der erste und der vierte Datenport, in einem dritten Verbindungszustand nur der erste und der dritte sowie der erste und der vierte Datenport, in einem vierten Verbindungszustand nur der zweite und der dritte Datenport, in einem fünften Verbindungszustand nur der zweite und der vierte Datenport, und in einem sechsten Verbindungszustand nur der zweite und der dritte sowie der zweite und der vierte Datenport miteinander verbunden.

Erfindungsgemäß weist daher jedes Fahrzeug an jedem seiner Enden eine Datenkopplungseinheit auf, die mit einer einsprechenden Datenkopplungseinheit eines anderen Fahrzeuges verbunden werden kann. Dadurch können über die Datenkopplungseinheiten zwischen den Fahrzeugen Daten übertragen und die Fahrzeuge miteinander vernetzt werden.

Die Datenkopplungseinheiten eines jeden Fahrzeuges sind durch eine erste Datenverbindung und durch eine redundante passive zweite Datenverbindung miteinander verbunden. Dadurch kann bei Ausfall der ersten Datenverbindung, in der sich aktive Netzwerkkomponenten befinden, die passive zweite Datenverbindung verwendet werden, so dass eine Datenübertragung zwischen den Fahrzeugen auch in diesem Fall aufrechterhalten werden kann.

Unter einer passiven Datenverbindung wird dabei eine Datenverbindung ohne aktive Netzwerkkomponenten verstanden.

Die Umschaltung zwischen den beiden Datenverbindungen wird dabei durch Switcheinheiten der Datenkopplungseinheiten ermöglicht.

Insbesondere kann dadurch bei einem Ausfall aktiver Netzwerkkomponenten in einem Fahrzeug, beispielsweise durch einen Brand in dem Fahrzeug, eine Datenübertragung zwischen den Fahrzeugen des Verkehrsmittels aufrechterhalten werden.

Wenigstens eine zweite Datenverbindung besteht dabei vorzugsweise aus einer zweiten Übertragungsleitung.

Dadurch ist die zweite (redundante) Datenverbindung besonders einfach und dadurch störungssicher gestaltet. Dies erhöht die Betriebssicherheit der Datenübertragungsvorrichtung vorteilhaft.

Ferner ist in einer möglichen Ausgestaltung der Erfindung wenigstens eine erste oder zweite Übertragungsleitung ein Lichtwellenleiter.

Dadurch kann die Länge von Übertragungsleitungen gegenüber als elektrische Kabel ausgebildeten Übertragungsleitungen erhöht werden, die eine fehlerfreie Datenübertragung ermöglichen, beispielsweise bei paketorientierten Netzwerken wie Ethernetnetzwerken. Insbesondere kann dadurch die Anzahl von aktiven Netzwerkkomponenten reduziert werden, die bei langen Übertragungsdistanzen als Zwischenstationen eingesetzt werden müssen, um die übertragenen Signale zu regenerieren. Dies reduziert vorteilhaft einerseits die Anzahl solcher Netzwerkkomponenten und damit auch die für sie anfallenden Kosten und erhöht außerdem die durch einen möglichen Ausfall derartiger Netzwerkkomponenten gefährdete Betriebssichersicherheit der Datenübertragungsvorrichtung.

Ein Ausführungsbeispiel der Erfindung sieht vor, dass wenigstens eine Datenkopplungseinheit eine alle vier Datenports aufweisende Switcheinheit aufweist.

Eine derartige Datenkopplungseinheit ist besonders einfach und damit kostengünstig herstellbar. Sie hat jedoch den Nachteil, dass ein Ausfall der Switcheinheit auch einen Ausfall der entsprechenden Datenkopplungseinheit bedingt.

Daher sieht ein weiteres Ausführungsbeispiel der Erfindung vor, dass wenigstens eine Datenkopplungseinheit zwei miteinander verbundene Switcheinheiten umfasst, wobei eine erste Switcheinheit den ersten und dritten Datenport aufweist und die zweite Switcheinheit den zweiten und den vierten Datenport aufweist.

Eine derartige Datenkopplungseinheit ist nur geringfügig aufwändiger als eine Datenkopplungseinheit des ersten Ausführungsbeispiels, hat gegenüber dieser jedoch den Vorteil, dass bei einem Ausfall einer der beiden Switcheinheiten weiterhin eine Datenübertragung über die zweite Switcheinheit möglich ist, und erhöht somit weiter die Betriebssicherheit der Datenübertragungsvorrichtung.

Eine Ausgestaltung der Erfindung sieht vor, dass wenigstens eine Datenkopplungseinheit von einer anderen mit ihr verbundenen Datenkopplungseinheit mit elektrischer Energie versorgbar ist.

Dadurch können Datenkopplungseinheiten auch dann mit Energie von jeweils einer Datenkopplungseinheit eines anderen Fahrzeuges versorgt werden, wenn ihre Energievorsorgung über das eigene Fahrzeug ausfällt. Dadurch wird die Betriebssicherheit der Datenübertragungsvorrichtung zusätzlich erhöht.

Eine weitere Ausgestaltung der Erfindung sieht vor, dass die Datenübertragungsvorrichtung zur paketorientierten Datenübertragung ausgebildet ist.

Dadurch können die Vorteile paketorientierter Datenübertragung genutzt werden. Insbesondere ermöglicht dies eine einfache Prüfung der übertragenen Daten hinsichtlich deren Vollständigkeit und Fehlerfreiheit.

Vorzugsweise ist die Datenübertragungsvorrichtung dabei eine Ethernetdatenübertragungsvorrichtung.

Dadurch können vorteilhaft bekannte und bewährte Ethernetstandards und -techniken genutzt und eine Kompatibilität mit auf diesen Standards und Techniken basierenden Geräten erreicht werden, so dass diese Geräte in einfacher Weise in das Netzwerk integriert werden können.

Ferner weist vorzugsweise wenigstens eine Datenkopplungseinheit eine so genannte Power-over-Ethernet-Versorgungseinheit auf, mittels derer eine mit ihr verbundene Datenkopplungseinheit mit elektrischer Energie versorgbar ist.

Dadurch können die bekannten Ethernettechniken insbesondere zur oben bereits erwähnten Energieversorgung von Datenkopplungseinheiten durch andere Datenkopplungseinheiten genutzt werden.

Die Erfindung eignet sich insbesondere vorteilhaft für Verkehrsmittel, deren Fahrzeuge Schienenfahrzeuge sind, da diese regelmäßig aus mehreren Fahrzeugen bestehen und relativ lang sind.

Weitere Vorteile, Merkmale und Einzelheiten der Erfindung werden im Folgenden anhand von Ausführungsbeispielen unter Bezugnahme auf Zeichnungen beschrieben. Dabei zeigen:
- FIG 1: ein Verkehrsmittel bestehend aus zwei Schienenfahrzeugen,
- FIG 2: ausschnittsweise ein Blockdiagramm einer Datenübertragungsvorrichtung für ein Verkehrsmittel,
- FIG 3: schematisch ein Blockdiagramm eines ersten Ausführungsbeispiels einer Datenkopplungseinheit,
- FIG 4: schematisch ein Blockdiagramm eines zweiten Ausführungsbeispiels einer Datenkopplungseinheit, und
- FIG 5: in Form einer Baumtopologie übertragungsaktiv miteinander verbundene Segmentverbindungseinheiten eines Verkehrsmittels.

Einander entsprechende Teile sind in allen Figuren mit den gleichen Bezugszeichen versehen.

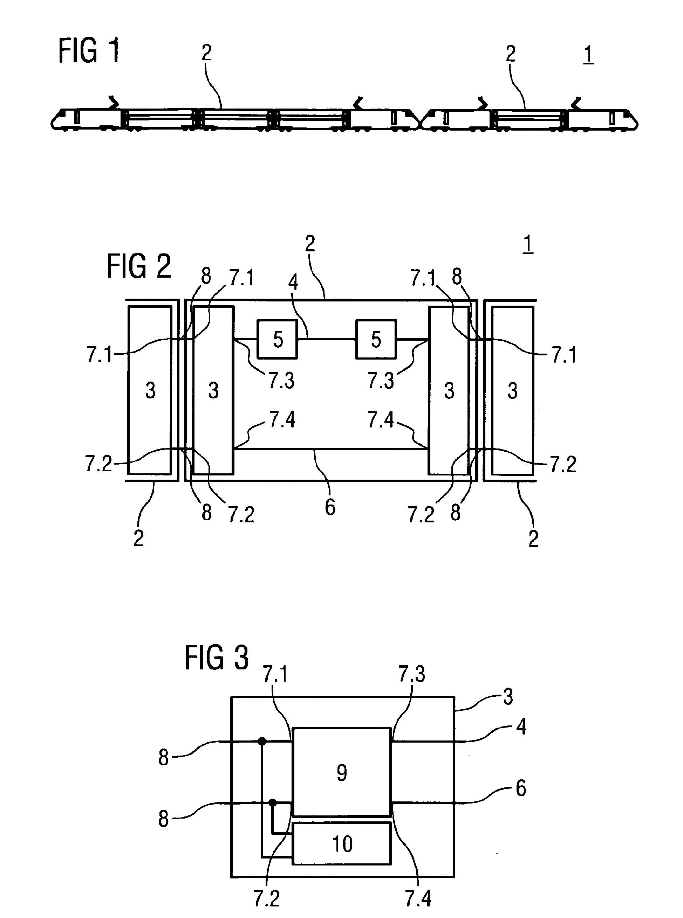

Figur 1 zeigt ein Verkehrsmittel 1 bestehend aus zwei lösbar miteinander verbundenen Fahrzeugen 2, die in diesem Beispiel Schienenfahrzeuge sind. Die Erfindung betrifft derartige Verkehrsmittel 1, deren Fahrzeuge 2 mehrere Hundert Meter lang sein können und die insbesondere auch aus mehr als zwei Fahrzeugen 2 bestehen können.

Figur 2 zeigt ausschnittsweise ein Blockdiagramm einer Datenübertragungsvorrichtung für ein Verkehrsmittel 1 bestehend aus mehreren Fahrzeugen 2. Die Datenübertragungsvorrichtung umfasst im Bereich beider Enden eines jeden Fahrzeuges 2 jeweils eine Datenkopplungseinheit 3 zur Datenübertragung zwischen dem jeweiligen Fahrzeug 2 und einem an dessen jeweiligen Ende mit ihm verbundenen Fahrzeug 2.

Ferner umfasst die Datenübertragungsvorrichtung in jedem Fahrzeug 2 eine seine beiden Datenkopplungseinheiten 3 verbindende erste Datenverbindung, die aus ersten Übertragungsleitungen 4 und jeweils zwei erste Übertragungsleitungen 4 verbindenden Segmentverbindungseinheiten 5 besteht und eine Linientopologie aufweist.

Ferner umfasst die Datenübertragungsvorrichtung in jedem Fahrzeug 2 eine zweite Übertragungsleitung 6, die eine seine beiden Datenkopplungseinheiten 3 verbindende redundante passive zweite Datenverbindung bildet.

Die Datenübertragungsvorrichtung ist in diesem Ausführungsbeispiel als Ethernetdatenübertragungsvorrichtung ausgebildet.

Die Segmentverbindungseinheiten 5 verbinden jeweils zwei erste Übertragungsleitungen 4 miteinander und regenerieren dabei das übertragene Signal, um Signalverfälschungen durch lange Übertragungsdistanzen zu verhindern bzw. zu reduzieren.

Die Übertragungsleitungen 4, 6 sind, insbesondere zwischen Segmentverbindungseinheiten 5 mit großen räumlichen Abständen von etwa 100 m, vorzugsweise als Lichtwellenleiter, beispielsweise als Glasfaserkabel, ausgebildet. Zwischen Segmentverbindungseinheiten 5 mit kürzeren Abständen können die ersten Übertragungsleitungen 4 auch als herkömmliche elektrische Kabel, beispielsweise als Kupferkabel, ausgebildet sein.

Jede Datenkopplungseinheit 3 weist vier Datenports 7.1 bis 7.4 auf. Von diesen sind ein erster 7.1 und ein zweiter 7.2 jeweils mit den entsprechenden Datenports 7.1, 7.2 einer Datenkopplungseinheit 3 eines anderen Fahrzeuges 2 über elektrische Kabelverbindungen 8 verbunden, die jeweils einen ersten oder zweiten Datenport 7.1, 7.2 eines Fahrzeuges 2 mit einem ersten oder zweiten Datenport 7.1, 7.2 des anderen Fahrzeuges 2 lösbar miteinander elektrisch verbinden.

Die Datenkopplungseinheiten 3 leiten die Daten zwischen den Kabelverbindungen 8 und den Übertragungsleitungen 4, 6 weiter und ermöglichen dabei erforderlichenfalls die Umstellung zwischen elektrischen und optische Übertragungsmedien.

Die lösbaren Kabelverbindungen 8 sind vorzugsweise jeweils gleichartig, beispielsweise mittels gleichartiger Steckverbindungen, ausgebildet, so dass jeder erste und zweite Datenport 7.1, 7.2 jedes Fahrzeuges 2 mit jedem ersten oder zweiten Datenport 7.1, 7.2 jedes anderen Fahrzeuges 2 verbindbar ist und eine Datenübertragung über die Kabelverbindungen 8 zwischen beliebigen Enden zweier Fahrzeuge 2 möglich ist. Dies ermöglicht vorteilhaft eine Verbindung zweier Fahrzeuge 2 an beliebigen ihrer Enden bei gleichzeitiger Datenübertragung zwischen den Fahrzeugen 2.

Ein dritter Datenport 7.3 jeder Datenkopplungseinheit 3 jedes Fahrzeuges 2 ist mit der ersten Datenverbindung dieses Fahrzeuges 2 verbunden und der vierte Datenport 7.4 jedes Fahrzeuges 2 ist mit der zweiten Übertragungsleitung 6 dieses Fahrzeuges 2 verbunden. Dadurch sind die Datenkopplungseinheiten 3 jedes Fahrzeuges 2 jeweils über ihre dritten Datenports 7.3 mittels einer ersten Datenverbindung und über ihre vierten Datenports 7.4 mittels einer zweiten Übertragungsleitung 6 miteinander verbunden.

Erfindungsgemäß werden Daten zwischen den beiden Datenkopplungseinheiten eines Fahrzeuges im Falle eines Ausfalls der ersten Datenverbindung über die zweite Übertragungsleitung 6 übertragen. Ein Ausfall der ersten Datenverbindung kann dabei verschiedene Ursachen haben, z. B. eine Nichtverfügbarkeit einer ihrer ersten Übertragungsleitungen 4 oder Segmentverbindungseinheiten 5, beispielsweise infolge eines Brandes. Bei einem solchen Ausfall innerhalb eines Fahrzeuges 2 werden die Daten also über die zweite Übertragungsleitung 6 zwischen den Datenkopplungseinheiten 3 dieses Fahrzeuges 2 umgeleitet. Dies ermöglicht vorteilhaft auch bei einem derartigen Ausfall eine Datenübertragung zwischen Fahrzeugen 2, die über das von dem Ausfall betroffene Fahrzeug 2 miteinander verbunden sind.

Eine entsprechende Steuerung der Datenübertragung über die zweite Übertragungsleitung 6 in Abhängigkeit von dem Übertragungszustand der ersten Datenverbindung wird mittels eines Redundanzprotokolls realisiert.

Figur 3 zeigt schematisch ein Blockdiagramm eines ersten Ausführungsbeispiels einer Datenkopplungseinheit 3. Die Datenkopplungseinheit 3 weist eine alle vier Datenports 7.1 bis 7.4 aufweisende Switcheinheit 9 und eine im Folgenden als PoE-Einheit bezeichnete Power-over-Ethernet-Versorgungseinheit 10 auf.

Mittels der Switcheinheit 9 sind verschiedene elektrische Verbindungszustände der Datenports 7.1 bis 7.4 herstellbar. Dabei sind in einem ersten Verbindungszustand nur der erste 7.1 und der dritte 7.3 Datenport, in einem zweiten Verbindungszustand nur der erste 7.1 und der vierte 7.4 Datenport, in einem dritten Verbindungszustand nur der erste 7.1 und der dritte 7.3 sowie der erste 7.1 und der vierte 7.4 Datenport, in einem vierten Verbindungszustand nur der zweite 7.2 und der dritte 7.3 Datenport, in einem fünften Verbindungszustand nur der zweite 7.2 und der vierte 7.4 Datenport, und in einem sechsten Verbindungszustand nur der zweite 7.2 und der dritte 7.3 sowie der zweite 7.2 und der vierte 7.4 Datenport miteinander verbunden. Dadurch kann mittels des Redundanzprotokolls eine Datenweiterleitung zwischen jeder der mit einer Datenkopplungseinheit 3 verbundenen Kabelverbindungen 8 und einer beliebigen Kombination der mit ihr verbundenen ersten und zweiten Übertragungsleitungen 4, 6 hergestellt werden.

Mittels der PoE-Einheiten 10 können sich miteinander verbundene Datenkopplungseinheiten 3 gegenseitig über die sie verbindenden Kabelverbindungen 8 mit elektrischer Energie versorgen.

In einer alternativen Ausführung kann die Energieversorgung der Datenkopplungseinheiten 3 jedoch auch über separate elektrische Stromkontakte der Datenkopplungseinheiten 3 anstelle der PoE-Einheiten 10 erfolgen. In diesem Fall werden die Datenkopplungseinheiten 3 also nicht über die Kabelverbindungen 8, über die auch Daten übertragen werden, sondern über separate elektrische Leitungen mit elektrischer Energie versorgt und die PoE-Einheiten 10 können entfallen.

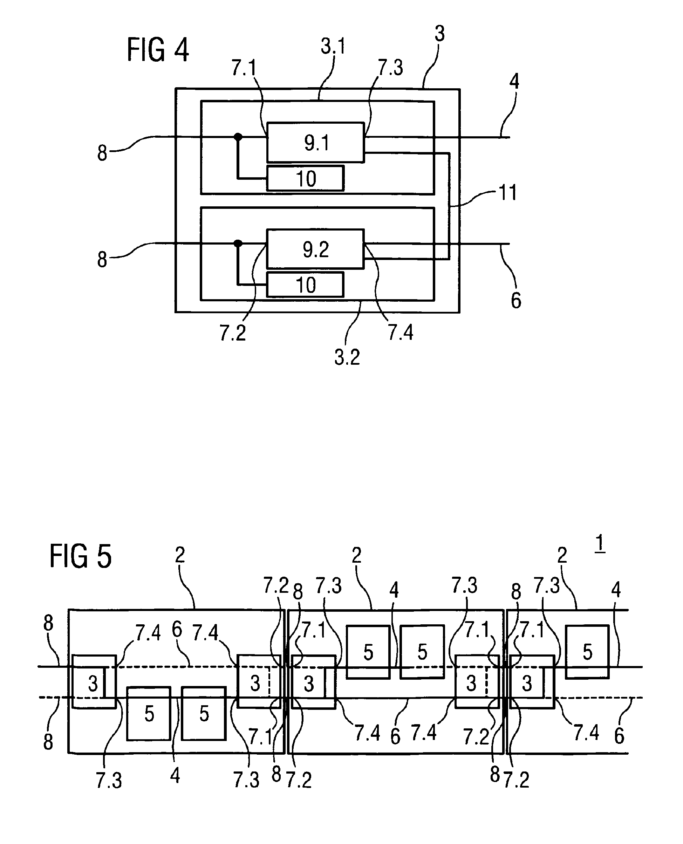

Figur 4 zeigt schematisch ein Blockdiagramm eines zweiten Ausführungsbeispiels einer Datenkopplungseinheit 3. Im Unterschied zu dem in Figur 3 dargestellten Ausführungsbeispiel besteht die Datenkopplungseinheit 3 in diesem Ausführungsbeispiel aus zwei Teileinheiten 3.1, 3.2, die jeweils eine eigene Switcheinheit 9.1, 9.2 und eine eigene PoE-Einheit 10 aufweisen. Dabei weist eine erste Switcheinheit 9.1 einer ersten Teileinheit 3.1 den ersten 7.1 und dritten 7.3 Datenport auf, und die zweite Switcheinheit 9.2 der zweiten Teileinheit 3.2 weist den zweiten 7.2 und vierten 7.4 Datenport auf. Ferner sind die beiden Switcheinheiten 9.1, 9.2 über eine Teileinheitenverbindung 11 miteinander verbunden. Dadurch sind die oben beschriebenen sechs Verbindungszustände auch mit diesem Ausführungsbeispiel realisierbar. Die Datenkopplungseinheit 3 dieses Ausführungsbeispiels hat gegenüber der in Figur 3 dargestellten den Vorteil, dass bei Ausfall einer Teileinheit 3.1, 3.2 mittels der zweiten Teileinheit 3.1, 3.2 weiterhin Daten übertragen werden können und erhöht somit vorteilhaft die Datenübertragungssicherheit.

Figur 5 zeigt in Form einer Baumtopologie übertragungsaktiv miteinander verbundene Segmentverbindungseinheiten 5 eines Verkehrsmittels 1. Eine derartige Baumtopologie ist für Ethernet erforderlich und wird durch das Redundanzprotokoll ermöglicht. Im dargestellten Beispiel sind die durchgezogen gezeichneten Übertragungsleitungen 4, 6 übertragungsaktiv, während die gestrichelt gezeichneten Übertragungsleitungen 4, 6 übertragungsinaktiv sind. Bei einem Ausfall einer übertragungsaktiven Verbindung wird eine bisher übertragungsinaktive Verbindung aktiviert. Die Rekonfiguration der Verbindungen erfolgt dabei durch Erkennung entstandener oder ausgefallener Ethernetlinks und/oder anhand des Ergebnisses einer zyklischen Überwachung des Verbindungsstatus miteinander verbundener Ethernetteilnehmer (Datenkopplungseinheiten 3 und Segmentverbindungseinheiten 5).

## Patentansprüche

1. Verkehrsmittel (1) bestehend aus lösbar miteinander verbundenen Fahrzeugen (2), mit einer Datenübertragungsvorrichtung zur kabelgebundenen Datenübertragung zwischen den Fahrzeugen (2) und innerhalb der Fahrzeuge (2), wobei die Datenübertragungsvorrichtung umfasst:
- im Bereich beider Enden eines jeden Fahrzeuges (2) jeweils eine Datenkopplungseinheit (3) zur Datenübertragung zwischen dem jeweiligen Fahrzeug (2) und einem an dessen jeweiligen Ende mit ihm verbundenen Fahrzeug (2),
- in jedem Fahrzeug (2) eine seine beiden Datenkopplungseinheiten (3) verbindende erste Datenverbindung, die aus ersten Übertragungsleitungen (4) und wenigstens einer zwei erste Übertragungsleitungen (4) verbindenden Segmentverbindungseinheit (5) besteht und eine Linientopologie aufweist,
- in jedem Fahrzeug (2) eine seine beiden Datenkopplungseinheiten (3) verbindende redundante zweite Datenverbindung,
- wobei jede Datenkopplungseinheit (3) vier Datenports (7.1 bis 7.4) aufweist, von denen ein erster (7.1) und ein zweiter (7.2) jeweils mit den entsprechenden Datenports (7.1 bis 7.4) einer Datenkopplungseinheit (3) eines anderen Fahrzeuges (2) verbunden sind, sowie ein dritter (7.3) mit der ersten Datenverbindung des Fahrzeuges (2) verbunden ist,
- und wobei jede Datenkopplungseinheit (3) eine oder mehrere Switcheinheiten (9, 9.1, 9.2) aufweist, mittels derer verschiedene elektrische Verbindungszustände der Datenports (7.1 bis 7.4) herstellbar sind,
**dadurch gekennzeichnet, dass**
- die redundante zweite Datenverbindung eine passive Datenverbindung ist,
- ein vierter Datenport (7.4) jeder Datenkopplungseinheit (3) mit der zweiten Datenverbindung des Fahrzeuges (2) verbunden ist, und
- in einem ersten Verbindungszustand nur der erste (7.1) und der dritte (7.3) Datenport, in einem zweiten Verbindungszustand nur der erste (7.1) und der vierte (7.4) Datenport, in einem dritten Verbindungszustand nur der erste (7.1) und der dritte (7.3) sowie der erste (7.1) und der vierte (7.4) Datenport, in einem vierten Verbindungszustand nur der zweite (7.2) und der dritte (7.3) Datenport, in einem fünften Verbindungszustand nur der zweite (7.2) und der vierte (7.4) Datenport, und in einem sechsten Verbindungszustand nur der zweite (7.2) und der dritte (7.3) sowie der zweite (7.2) und der vierte (7.4) Datenport miteinander verbunden sind.

2. Verkehrsmittel (1) nach Anspruch 1,
**dadurch gekennzeichnet, dass** wenigstens eine zweite Datenverbindung aus einer zweiten Übertragungsleitung (6) besteht.

3. Verkehrsmittel (1) nach Anspruch 2,
**dadurch gekennzeichnet, dass** wenigstens eine zweite Übertragungsleitung (6) ein Lichtwellenleiter ist.

4. Verkehrsmittel (1) nach einem der vorhergehenden Ansprüche,
**dadurch gekennzeichnet, dass** wenigstens eine erste Übertragungsleitung (4) ein Lichtwellenleiter ist.

5. Verkehrsmittel (1) nach einem der vorhergehenden Ansprüche,
**dadurch gekennzeichnet, dass** wenigstens eine Datenkopplungseinheit (3) eine alle vier Datenports (7.1 bis 7.4) aufweisende Switcheinheit (9) aufweist.

6. Verkehrsmittel (1) nach einem der vorhergehenden Ansprüche,
**dadurch gekennzeichnet, dass** wenigstens eine Datenkopplungseinheit (3) zwei miteinander verbundene Switcheinheiten (9.1, 9.2) umfasst, wobei eine erste Switcheinheit (9.1) den ersten (7.1) und dritten (7.3) Datenport aufweist und die zweite Switcheinheit (9.2) den zweiten (7.2) und den vierten (7.4) Datenport aufweist.

7. Verkehrsmittel (1) nach einem der vorhergehenden Ansprüche,
**dadurch gekennzeichnet, dass** wenigstens eine Datenkopplungseinheit (3) von einer anderen mit ihr verbundenen Datenkopplungseinheit (3) mit elektrischer Energie versorgbar ist.

8. Verkehrsmittel (1) nach einem der vorhergehenden Ansprüche,
**dadurch gekennzeichnet, dass** die Datenübertragungsvorrichtung zur paketorientierten Datenübertragung ausgebildet ist.

9. Verkehrsmittel (1) nach Anspruch 8,
**dadurch gekennzeichnet, dass** die Datenübertragungsvorrichtung eine Ethernetdatenübertragungsvorrichtung ist.

10. Verkehrsmittel (1) nach Anspruch 9,
**dadurch gekennzeichnet, dass** wenigstens eine Datenkopplungseinheit (3) eine Power-over-Ethernet-Versorgungseinheit (10) aufweist, mittels derer eine mit ihr verbundene Datenkopplungseinheit (3) mit elektrischer Energie versorgbar ist.

11. Verkehrsmittel (1) nach einem der vorhergehenden Ansprüche,
**dadurch gekennzeichnet, dass** die Fahrzeuge (2) Schienenfahrzeuge sind.

## Claims

1. Means of transport (1) consisting of vehicles (2) which are detachably connected to one another, with a data transmission apparatus for wired data transmission between the vehicles (2) and within the vehicles (2), the data transmission apparatus comprising:
- in the region of both ends of each vehicle (2) a data coupling unit (3) for transmitting data between the respective vehicle (2) and a vehicle (2) connected to it at its respective end,
- in each vehicle (2) a first data connection connecting its two data coupling units (3), said first data connection consisting of first transmission lines (4) and at least one segment connection unit (5) connecting two first transmission lines (4) and having a line topology,
- in each vehicle (2) a redundant second data connection connecting its two data coupling units (3),
- wherein each data coupling unit (3) has four data ports (7.1 to 7.4), of which a first (7.1) and second (7.2) are connected respectively to the corresponding data ports (7.1 to 7.4) of a data coupling unit (3) of another vehicle (2), and a third (7.3) is connected to the first data connection of the vehicle (2),
- and wherein each data coupling unit (3) has one or more switch units (9, 9.1, 9.2), which can be used to establish different electrical connection states of the data ports (7.1 to 7.4),
**characterised in that**
- the redundant second data connection is a passive data connection,
- a fourth data port (7.4) of each data coupling unit (3) is connected to the second data connection of the vehicle (2), and
- in a first connection state only the first (7.1) and third (7.3) data ports are connected to one another, in a second connection state only the first (7.1) and fourth (7.4) data ports are connected to one another, in a third connection state only the first (7.1) and third (7.3) and the first (7.1) and fourth (7.4) data ports are connected to one another, in a fourth connection state only the second (7.2) and third (7.3) data ports are connected to one another, in a fifth connection state only the second (7.2) and fourth (7.4) data ports are connected to one another and in a sixth connection state only the second (7.2) and third (7.3) and the second (7.2) and fourth (7.4) data ports are connected to one another.

2. Means of transport (1) according to claim 1,
**characterised in that** at least one second data connection consists of a second transmission line (6).

3. Means of transport (1) according to claim 2,
**characterised in that** at least one second transmission line (6) is an optical waveguide.

4. Means of transport (1) according to one of the preceding claims,
**characterised in that** at least one first transmission line (4) is an optical waveguide.

5. Means of transport (1) according to one of the preceding claims,
**characterised in that** at least one data coupling unit (3) has a switch unit (9) having all four data ports (7.1 to 7.4).

6. Means of transport (1) according to one of the preceding claims,
**characterised in that** at least one data coupling unit (3) comprises two connected switch units (9.1, 9.2), a first switch unit (9.1) having the first (7.1) and third (7.3) data ports and the second switch unit (9.2) having the second (7.2) and fourth (7.4) data ports.

7. Means of transport (1) according to one of the preceding claims,
**characterised in that** at least one data coupling unit (3) can be supplied with electrical energy from another data coupling unit (3) connected to it.

8. Means of transport (1) according to one of the preceding claims,
**characterised in that** the data transmission apparatus is configured for packet-oriented data transmission.

9. Means of transport (1) according to claim 8,
**characterised in that** the data transmission apparatus is an Ethernet data transmission apparatus.

10. Means of transport (1) according to claim 9,
**characterised in that** at least one data coupling unit (3) has a power over Ethernet supply unit (10), which can be used to supply a data coupling unit (3) connected to it with electrical energy.

11. Means of transport (1) according to one of the preceding claims,
**characterised in that** the vehicles (2) are rail vehicles.

## Revendications

1. Moyen (1) de transport constitué de véhicules (2) reliés entre eux de manière amovible, comprenant un dispositif de transmission de données pour la transmission de données par câble entre les véhicules (2) et à l'intérieur des véhicules (2), le dispositif de transmission de données comprenant :
- dans la zone des deux extrémités de chaque véhicule (2) respectivement une unité (3) de couplage de données pour la transmission de données entre le véhicule (2) respectif et un véhicule (2) qui lui est relié à son extrémité respective,
- dans chaque véhicule (2) une première liaison de données, qui relie les deux unités (3) de couplage de données, qui est constituée de premières lignes (4) de transmission et d'au moins une unité (5) de liaison de segment reliant deux premières lignes (4) de transmission et qui a une topologie linéaire,
- dans chaque véhicule (2) une deuxième liaison de données redondante, reliant ses deux unités (3) de couplage de données,
- dans lequel chaque unité (3) de couplage de données a quatre accès (7.1 à 7.4) de données dont un premier (7.1) et un deuxième (7.2) sont reliés respectivement aux accès (7.1 à 7.4) de données correspondants d'une unité (3) de couplage de données d'un autre véhicule (2), ainsi qu'un troisième (7.3) est relié à la première liaison de données du véhicule (2),
- dans lequel chaque unité (3) de couplage de données a une ou plusieurs unités (9, 9.1, 9.2) de commutation, au moyen desquelles des états de liaison électriques différents des accès (7.1 à 7.4) de données peuvent être obtenus,
**caractérisé en ce que**
- la deuxième liaison de données redondante est une liaison de données passives,
- un quatrième accès (7;4) de données de chaque unité (3) de couplage de données est relié à la deuxième liaison de données du véhicule (2) et
- dans un premier état de liaison seuls le premier (7.1) et le troisième (7.3) accès de données, dans un deuxième état de liaison seuls le premier (7.1) et le quatrième (7.4) accès de données, dans un troisième état de liaison seuls le premier (7.1) et le troisième (7.3) ainsi que le premier (7.1) et le quatrième (7.4) accès de données, dans un quatrième état de liaison seuls le deuxième (7.2) et le troisième (7.3) accès de données, dans un cinquième état de liaison seuls le deuxième (7.2) et le quatrième (7.4) accès de données et dans un sixième état de données seuls le deuxième (7.2) et le troisième (7.3) ainsi que le deuxième (7.2) et le quatrième (7.4) accès de données sont reliés entre eux.

2. Moyen (1) de transport suivant la revendication 1, **caractérisé en ce qu'**au moins une deuxième liaison de données est constituée d'une deuxième ligne (6) de transmission.

3. Moyen (1) de transport suivant la revendication 2, **caractérisé en ce qu'**au moins une deuxième ligne (6) de transmission est une fibre optique.

4. Moyen (1) de transport suivant l'une des revendications précédentes,
**caractérisé en ce qu'**au moins une première ligne (4) de transmission est une fibre optique.

5. Moyen (1) de transport suivant l'une des revendications précédentes,
**caractérisé en ce qu'**au moins une unité (3) de couplage de données a une unité (9) de commutation ayant l'ensemble des quatre accès (7.1 à 7.4) de données.

6. Moyen (1) de transport suivant l'une des revendications précédentes,
**caractérisé en ce qu'**au moins une unité (3) de couplage de données comprend deux unités (9.1, 9.2) de commutation reliées ensemble, une première unité (9.1) de commutation ayant le premier (7.1) et le troisième (7.3) accès de données et la deuxième unité (9.2) de commutation ayant le deuxième (7.2) et le quatrième (7.4) accès de données.

7. Moyen (1) de transport suivant l'une des revendications précédentes,
**caractérisé en ce qu'**au moins une unité (3) de couplage de données peut être alimentée en énergie électrique par une autre unité (3) de couplage de données, qui lui est reliée.

8. Moyen (1) de transport suivant l'une des revendications précédentes,
**caractérisé en ce que** le dispositif de transmission de données est constitué pour la transmission de données par paquet.

9. Moyen (1) de transport suivant la revendication 8, **caractérisé en ce que** le dispositif de transmission de données est un dispositif de transmission de données par éthernet.

10. Moyen (1) de transport suivant la revendication 9,
**caractérisé en ce qu'**au moins une unité (3) de couplage de données a une unité (10) d'alimentation power-over-éternet, au moyen de laquelle une unité (3) de couplage de données, qui lui est reliée, peut être alimentée en énergie électrique.

11. Moyen (1) de transport suivant l'une des revendications précédentes,
**caractérisé en ce que** les véhicules (2) sont des véhicules ferroviaires.
